Europäisches Patentamt

(19) European Patent Office

Office européen des brevets

(11) EP 1 617 576 B1

(12) **EUROPEAN PATENT SPECIFICATION**

(45) Date of publication and mention
of the grant of the patent:
**29.11.2006 Bulletin 2006/48**

(51) Int Cl.:
***H04B 10/155*** (2006.01)

(21) Application number: **04291830.0**

(22) Date of filing: **13.07.2004**

(54) **Bandwidth limited frequency shift keying modulation format**

Bandbegrenztes FSK Modulationsverfahren

Format de modulation FSK à largeur de bande limitée

(84) Designated Contracting States:
**AT BE BG CH CY CZ DE DK EE ES FI FR GB GR
HU IE IT LI LU MC NL PL PT RO SE SI SK TR**

(43) Date of publication of application:
**18.01.2006 Bulletin 2006/03**

(73) Proprietor: **ALCATEL
75008 Paris (FR)**

(72) Inventors:
• **Lazaro Villa, José Antonio
22240 Tardienta (Huesca) (ES)**
• **Idler, Wilfried
71706 Markgröningen (DE)**

(74) Representative: **Rausch, Gabriele et al
Alcatel
Intellectual Property Group, Stuttgart
70430 Stuttgart (DE)**

(56) References cited:
EP-A- 0 702 463          EP-A- 1 185 006
US-A- 5 896 211

• **ZHANG J ET AL OPTICAL SOCIETY OF AMERICA
/ INSTITUTE OF ELECTRICAL AND
ELECTRONICS ENGINEERS: "A novel optical
labeling scheme using a FSK modulated DFB
laser integrated with an EA modulator" OPTICAL
FIBER COMMUNICATION CONFERENCE. (OFC).
POSTCONFERENCE DIGEST. ATLANTA, GA,
MARCH 23 - 28, 2003, TRENDS IN OPTICS AND
PHOTONICS SERIES. (TOPS), WASHINGTON,
DC : OSA, US, vol. TOPS. VOL. 86, 23 March 2003
(2003-03-23), pages 279-280, XP010680279 ISBN:
1-55752-746-6**
• **MAJUMDER S P ET AL: "Performance analysis
and simulation of optical direct detection FSK and
DPSK systems" PROCEEDINGS OF THE IEEE
1996 NATIONAL AEROSPACE AND
ELECTRONICS CONFERENCE, vol. 2, 20 May
1996 (1996-05-20), pages 686-693, XP002310442
NEW YORK US**
• **JIANG Q ET AL: "A SUBCARRIER-MULTIPLEXED
COHERENT FSK SYSTEM USING A MACH-
ZEHNDER MODULATOR WITH AUTOMATIC BIAS
CONTROL" IEEE PHOTONICS TECHNOLOGY
LETTERS, IEEE INC. NEW YORK, US, vol. 5, no.
8, 1 August 1993 (1993-08-01), pages 941-943,
XP000399654 ISSN: 1041-1135**
• **ZHANG J ET AL: "AN OPTICAL FSK
TRANSMITTER BASED ON AN INTEGRATED DFB
LASER-EA MODULATOR AND ITS APPLICATION
IN OPTICAL LABELING" IEEE PHOTONICS
TECHNOLOGY LETTERS, IEEE INC. NEW YORK,
US, vol. 15, no. 7, July 2003 (2003-07), pages
984-986, XP001175861 ISSN: 1041-1135**

## Description

Technical Field

The present invention relates to a method for processing optical signals to be transmitted through an optical transmission line using optical pulse stream with a Frequency Shift Keying format.

Background of the invention

For long-haul optical signal transmission, information to be transmitted is modulated onto an optical carrier signal and transmitted over an optical fiber link. Due to dispersion and other physical effects in the optical fiber, the modulated optical signal is subjected to distortion that limits the data rate and the span length the signal can pass without signal regeneration.

Currently, next generation transmission systems using bitrates in the range of 40 Gbit/s - in particular 42,6 Gbit/s - are being developed. The development of cost-effective 43 Gbit/s transmission systems, however, requires comprehensive evaluations of modulation formats regarding system performance and tolerances. Optical signal-to-noise (OSNR) sensitivity, penalty by residual chromatic dispersion (CD) and differential group delay (DGD) due to first order polarization mode dispersion (PMD) are of major interest for the system design.

Two binary modulation schemes are mainly used, namely intensity modulation also known as amplitude shift keying (ASK) and phase modulation also known as phase shift keying (PSK), from which the most common realization is the differential phase shift keying (DPSK). ASK is essentially a simple on/off modulation of the carrier signal. DPSK on the other hand is a modulation where the phase of the carrier signal is discretely varied. The data is represented in the phase difference of two signal elements while the amplitude of the DPSK modulated signal is typically constant. This DPSK scheme is referred as non-return-to-zero DPSK (NRZ-DPSK). Frequency Shift Keying (FSK) is another attractive modulation format. The digital signal to be transmitted over a dispersive optical waveguide is frequency modulated. As a result wave trains with different wavelengths $\lambda_0$ and $\lambda_1$ are launched into the optical waveguide. Due to chromatic dispersion of the optical waveguide, the time required for light with the longer wavelength $\lambda_0$ to propagate through the fiber-optic link is greater than that required for light with the shorter wavelength $\lambda_1$. Accordingly, there is a period of time $\Delta\tau$ during which the last part of the first wave train of wavelength $\lambda_0$, for example, overlaps the first part of the wave train of wavelength $\lambda_1$. This period $\Delta\tau$ is called "propagation time difference" and is given by

$$\Delta\tau = \Delta\lambda * D * L$$

where
$\Delta\lambda$ = difference between $\lambda_0$ and $\lambda_1$
D = chromatic dispersion of the optical waveguide
L = length of the fiber-optic link.

As a result of the above-mentioned overlaps, an intensity-modulated signal is received at the end of the fiber-optic link. To recover the digital signal from this signal, an integrator or low-pass filter in conjunction with a decision circuit is provided.

Most of the FSK transmitters are usually implemented by direct modulation of distributed feedback (DFB) lasers. See for example: "10.7 Gbit/s FSK Transmission with 61 dB power budget", B. Wedding et al., ECOC'03; and b) "An optical FSK transmitter based on an integrated DFB Laser-EA modulator and its application on optical labeling", J. Zhang et al., IEEE Photon. Techn. Lett., 15,7, July 2003, an Electro Absorption modulator is used to compensate the detrimental intensity modulation of the FSK signal generated by direct modulated lasers.

In JP2000056279 is described an electrical FSK modulated signal to drive a Mach-Zehnder modulator. Also in a paper "A Subcarrier-multiplexed coherent FSK system using a Mach-Zehnder modulator with automatic bias control", IEEE Photon. Techn. Lett. 5, 8, 1993 was discussed "FSK" format and "Modulators". But it is related to the Subcarrier Multiplexing (SCM) Techniques.

Recently, new modulation formats have been proposed to achieve cost-effective 43 Gb/s transmission systems. In addition to the long-established ASK (Amplitude Shift Keying) modulation formats, the DPSK (Differential Phase Shift Keying) modulation format has become attractive due to its higher sensitivity that enables an expansion of the maximal transmission distance ("A DWDM demonstration of 3.73 Tb/s over 11000 km using 373 RZ-DPSK Channels at 10 Gb/s", J.X. Cai et al (Tyco Telecomunications) OFC'03 PD22). Another way has been followed looking for high spectral efficiencies (0.8bit/s/Hz) using BL-PSBT (Bandwidth Limited Phase-Shaped Binary Transmission) modulation formats ("Cost-optimized 6.3Tbit/s-capacity terrestrial link over 17x100km using Phase-Shaped binary Transmission in a conventional all-EDFA SMF-based system", G. Charlet et al, OFC'03, PD25).

But, Optical Transmission Systems requires modulation formats with high system performances (low Bit Error Rate at low received powers), as large as possible tolerances against CD (residual chromatic dispersion), PMD (polarization mode dispersion) and reduced non-linear impairments, as well as high spectral efficiency (measured in bits/s/Hz). Finally, as a result of the slowdown of the telecom industry, all these requirements must be fulfilled at first in a real cost-effective way to have a chance that the operators of terrestrial WDM optical networks will be willing to upgrade their network with it.

## Summary of the invention

In view of the above, it is an object of the present invention to provide a method for processing optical signals showing real improvement for the transmission of these optical signals over long distance at high bit rate but without implying to high costs.

This object is achieved in accordance with the invention by the use of a new modulation format (BL-FSK) based on the generation of a frequency modulated signal. It is obtained by driving an electro-optical modulator (e.g. LiNbO3) with a 1-bit delay pre-coded signal (or some other differential pre-coding) in a similar way as for generating DPSK. But unlike for DPSK, it is advantageously make use of the bandwidth limitation of the electrical and electro-optical components, chosen close to a half of the bit rate (B). In that way, a ramp-electrical signal is generated that produces the FSK modulation. As a direct consequence of such modulation, a higher spectral efficiency and a lower cost construction of the transmitter is achieved.

Advantageous developments of the invention are described in the dependent claims, the following description and the drawings.

## Description of the drawings

An exemplary embodiment of the invention will now be explained further with the reference to the attached drawings in which:

Fig. 1        is a schematic diagram of a configuration to produce BL-FSK optical data signal using a Z-cut electro-optic Mach-Zehnder modulator;

Fig. 2a, 2b   show two ASK optical eyes generated with a bandwidth cut-off of 40 GHz (a) and with 20 GHz (b);

Fig. 3        shows an ASK optical eyes according to the invention;

Fig. 4a, 4b   show respectively a frequency modulation and a spectrum of a NRZ BL-FSK optical signal with Δf~100GHz;

Fig. 5a, 5b   show respectively a frequency modulation and a spectrum of a NRZ BL-FSK optical signal with Δf~25GHz;

Fig. 6        shows an embodiment of a receiver according to the invention;

Fig. 7a - 7d  show different electrical eyes obtained from a NRZ BL-FSK optical signal according to the invention;

Fig. 8        shows a comparison of the relative sensitivity of NRZ-DPSK and NRZ-BL-FSK modulation formats;

Fig. 9a, 9b   show electrical eyes obtained from a RZ 50% BL-FSK optical signal;

Fig. 10       shows a comparison of the relative sensitivity of NRZ-DPSK, NRZ-BL-FSK and RZ50-BL-FSK modulator formats;

Fig. 11       shows differential eyes obtained from the RZ 50% BL-FSK optical signal.

## Detailed description of preferred embodiments

The invention is based on using a band limited differential pre-coded data signal to drive a phase modulator (for example a push-push Mach-Zehnder modulator with the same data signal for both electrodes). The limited electrical bandwidth of the electrical and optoelectronic components (modulator driver and modulator) produces a ramp-signal instead of a stair-case data signal. The ramp-signal is maximal for an electrical bandwidth half of the bit rate (Electrical Bandwidth ~ B/2). Such ramp data signal is used to modulate the CW emission of a laser. The result is a frequency modulation of the optical carrier so that the one of the two bit states (here "0" state) have the same frequency as the carrier and the other state (here "1" state) have $\pm \Delta f$ frequency. The frequency deviation $\Delta f$ can be flexibly varied by varying the amplitude of the electrical data signal applied to the modulator.

The optical spectrums of the "0s" and "1s" are limited to B (the Bit rate bandwidth) and allow for high spectral efficiencies (typically double than the usual ones). The different frequencies for "0s" and "1s" permit to use a balance receiver technique to achieve a high sensibility. The FSK/ASK conversion can be done by an optical Mach-Zehnder or by thin filters. Also the different frequency for "0s" and "1s" allows a higher Chromatic Dispersion tolerance.

It is important to remark that due to the bandwidth limited implementation of the FSK modulation format it allows to use drivers and electro-optical modulators specified for 20 Gb/s to fabricate 40 Gb/s transmitters with the consequent cost reduction. Also modulators specified for 12 Gb/s could be used (incurring in a sensitivity penalty).

The NRZ BL-FSK format can be accomplished with RZ (return to zero) carving of 33%. 50% or 66% duty cycle. Thus the RZ-BL-FSK format enable increased sensitivity and also increased tolerances against PMD and non-linear impairments compared to NRZ-BL-FSK. This accomplished RZ-BL-FSK modulation can be implemented without a significant improvement of the transmitter, because the BL-FSK data modulation and the RZ carving can be realized using a single Mach-Zehnder modulator in the same way as the generation of RZ-DPSK has been proposed to be accomplished using a single MZ modulator in a previous Alcatel patent application (EP 03292707.1[11]).

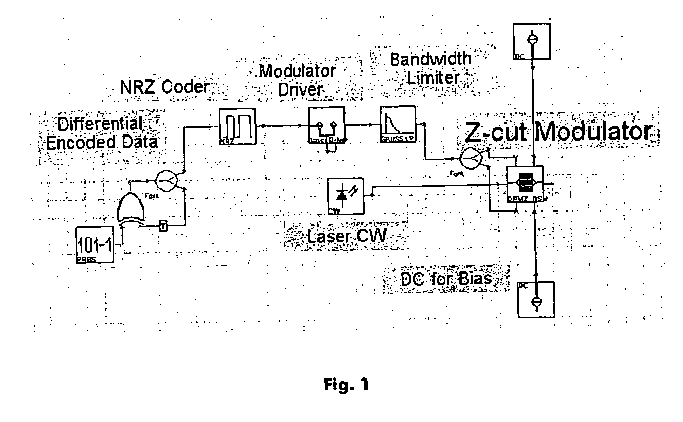

Figure 1 shows a drawing of an implementation of the method according to the invention. A Differential (1 bit-delay) Encoder produces a differential data (e.g. a "1" is given when a transition between symbols -"1" and "0"- is found in the input data and a "0" is given when a symbol is followed by the same one). On the embodiment on fig. 1 is used a differential encoder with a EXOR gate and a feedback tap with one bit delay. Such a differential encoder (or a similar implementation without feedback tap) is also necessary for the implementation of DPSK or PSBT transmitters and it does not represent a cost disadvantage for BL-FSK in comparison with DPSK or PSBT. In figure 1, a NRZ coder is inserted only for the simulations in order to transform a "logic" signal ("0" and "1") into a electrical signal between 0V and 1V.

A Phase Modulator is the basic component for realization of a BL-FSK Transmitter. Such Phase Modulator can be implemented by a number of optical components, just a device able to perform a phase modulated signal. For our simulations a Z-cut LiNbO3 modulator has been used. Alternative implementations using a X-cut modulator will be shown later on. A CW Laser provides the optical carrier. A Gaussian Bandwidth Limiter follows the modulator driver to simulate the bandwidth limitations of driver+modulator.

The new modulation format is called Bandwidth Limited (BL) because the frequency cut-off of the driver+modulator play a decisive roll in the generation of the BL-FSK optical signal. For the simulations, the 3dB cut-off of the Bandwidth Limiter was set to B/2, where B is the Bit rate of the signal. It permits then to use modulator drivers and modulators specified for B/2 bit rates to produce B bit rates signals with the corresponding cost reduction.

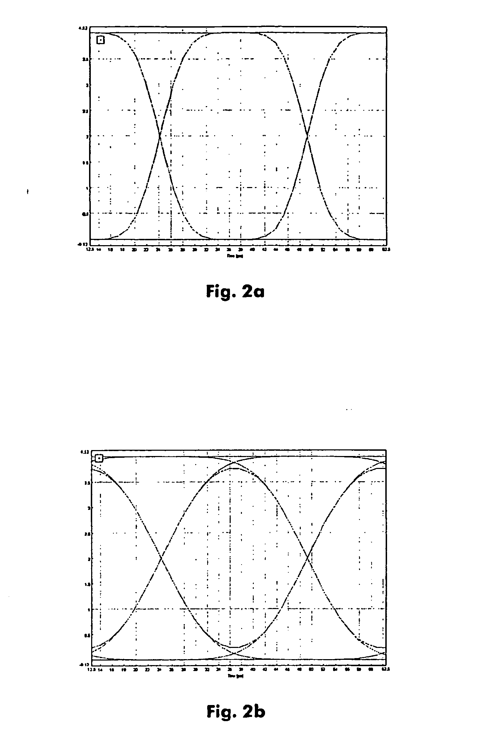

In order to show the basic idea of the present invention, Figure 2 shows two 40Gb/s ASK optical eyes. The first one (fig. 2a) is obtained for a bandwidth limitation of the driver+modulator of 40GHz. For the second one (fig. 2b), the bandwidth limitation is 20GHz. It can be seen that the reduction of the bandwidth introduces impairments in the ASK eye.

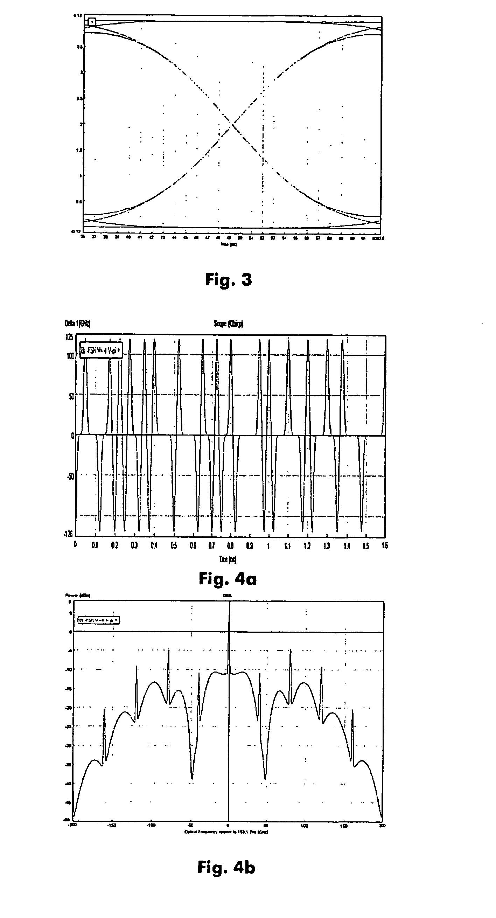

Figure 3 shows a sketch of the idea underlying the BL-FSK modulation format. The eye is defined at half bit delay from the usual ASK eye and the basic idea is to transform the amplitude slope in a phase slope that produces the frequency modulation of the carrier.

An important parameter to describe the FSK modulation formats is the "frequency deviation" $\Delta f = \Delta\omega/2\pi$. It is also called the "tone spacing" and it represents the frequency spacing between 1 and 0 bits. It is proportional to the inverse of the propagation time differences as described above. In case of the current BL-FSK modulation format, the frequency modulation can be tuned by a variation of the amplitude of the electrical driving signals. Of course, the frequency deviation could be also increased by using modulators or modulator drivers with broader bandwidth, but it would produce an unfavorable broader optical spectra and also an increase of the cost of the transmitter.

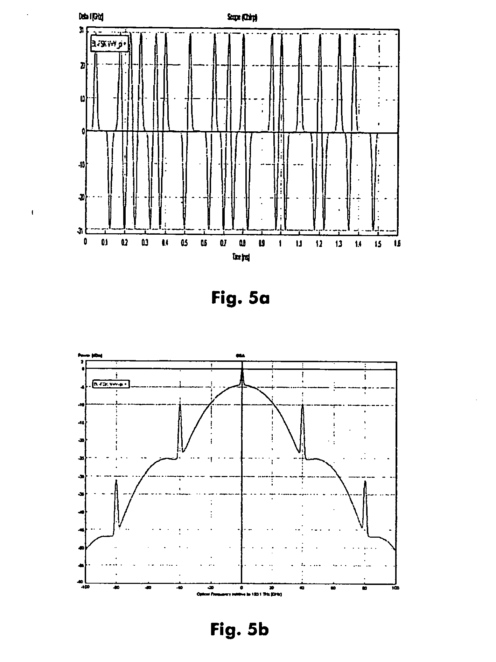

In order to show the possibility to modify the frequency deviation, figure 4 and figure 5 show the frequency modulation (shown as chirp) and the optical spectrum of the 40 Gb/s optical signal generated by the elements of the figure 1, for two exemplary frequency deviation values: 100GHz and 25GHz. The amplitude of the signal is not shown because it has been checked to be just constant.

The value of $\Delta f \sim 100$GHz for the modulation signal of figure 4 has been chosen to show the frequency components corresponding the "0" (central main lobe) and the "1" (both side main lobes). The spectrum of this signal is very broad.

In order to achieve a more spectrally compact modulation format, figure 5 shows the frequency modulation and spectrum for a $\Delta f \sim 25$ GHz. Such a spectrum is narrower than the NRZ-DPSK modulation format ($\sim 75$ GHz @ -20 dB for DPSK and $\sim 70$ GHz for BL-FSK) and in that case the spectral components of the "0" and "1" overlap. Still narrower spectrum could be obtain by decreasing the frequency deviation.

The conversion from a FSK to an ASK signal to be detected by direct-detection receivers can be achieved mainly by two different optical filtering techniques. The first one by using a passive Mach-Zehnder interferometer. In such a way, the BL-FSK modulation format could be seen as a generalization of the DPSK modulation format, because it uses the same elements: differential encoder, phase modulator and optical MZ demodulator, but with a wider range of parameters available like: amplitude of the phase modulation and corresponding time delay of the MZ demodulator. Nevertheless, we will see that BL-FSK has specific characteristics due to the Frequency instead of the Phase Shift Keying.

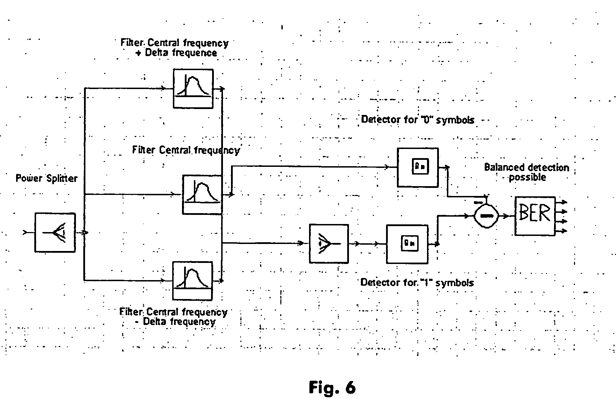

The second FSK/ASK conversion scheme can be performed using narrow filters. An example of an embodiment of such a receiver is shown on fig. 6. The advantages of this solution are: a) it also removes much of the optical noise and b) this filtering could directly be made by the demultiplexer and then no additional optical component would be required.

## NRZ-BL-FSK

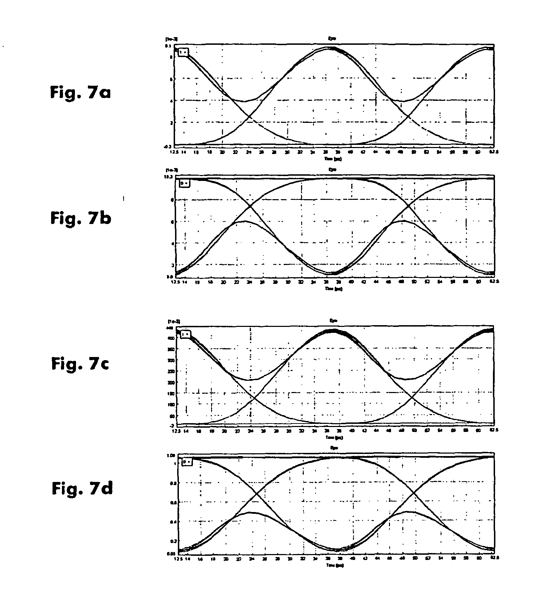

In order to illustrate the performance of BL-FSK modulation format, the Figure 7a, to 7d shows the electrical eyes obtained from a $\Delta f \sim 100$GHz NRZ BL-FSK signal from figure 4a, 4b. Both demodulation techniques have been used. The eyes shown at Fig. 7a, 7b have been found after Mach-Zehnder demodulation with a time delay of 5 ps (0.2 bit time) and a typical PIN diode. The eyes shown at Fig. 7c, 7d have been obtained using 3 Gaussian optical filters with a central wavelength difference of 100 GHz. The eyes at Fig. 7a, 7c correspond to the destructive interference of the MZ demodulator and $\pm \Delta f$ centered Gaussian optical filters, respectively. The eyes at Fig. 7b, 7d correspond, also respectively, to the constructive interference and carrier frequency centered optical filter.

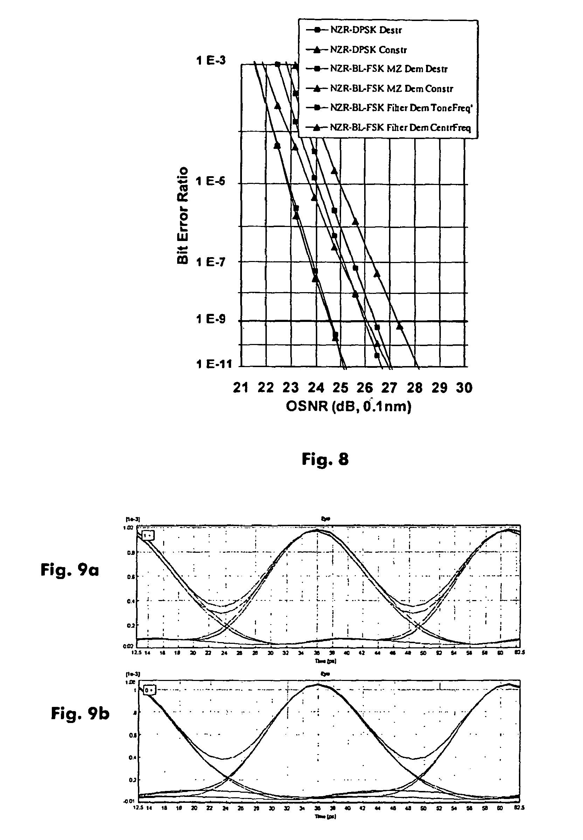

Minimal differences can be observed in the quality of the eyes of the figure 7. In order to provide a easier comparison of the performance of the two demodulation techniques, the BER curves versus OSNR has been calculated in figure 8. Also the BER curve has been calculated for the NRZ-DPSK modulation format (MZ demultiplexed) for reference. Gaussian filtering have been used.

From the BER curves of the figure 8, it can be seen that the thin filtering demodulation technique performs a bit better than the MZ demodulation for the NRZ-BL-FSK. The filtering demodulation does not produce constructive or destructive interferences. Instead, it filters the signal with $\pm \Delta f$ frequencies and separates then from those still having the carrier frequency.

RZ-BL-FSK

The BL-FSK modulation can be enhanced by carving the transmitted signal. As an example, the RZ carving with 50% duty cycle has been used for our simulations. As it has been already tested that the filtering demodulation performs better than the MZ.

Figure 9a/b show the electrical eyes obtained for the 50%RZ-BL-DPSK modulation format with filtering demodulation ($\Delta F \sim 100$ GHz) after optical filtering using 3 Gaussian filters with a central wavelength difference of 100 GHz and a PIN photodiode. On Fig. 9a is shown the signal obtained at $\pm \Delta f$ frequencies. They correspond to the signal obtained as a destructive interference using the Mz demodulation. Similarly, on Fig. 9b is shown the signals close to the carrier frequency that corresponds to the constructive interference of the MZ demodulation.

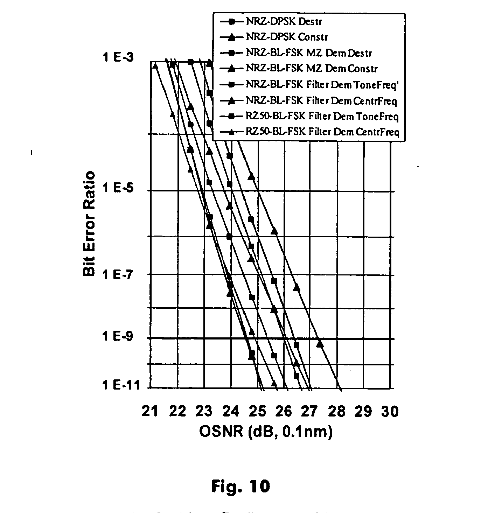

A sensitivity improvement of the RZ-BL-FSK can be seen in figure 10 compared to NRZ-BL-FSK. In that case, BL-FSK performs so good as NRZ-DPSK.

Balance receiver

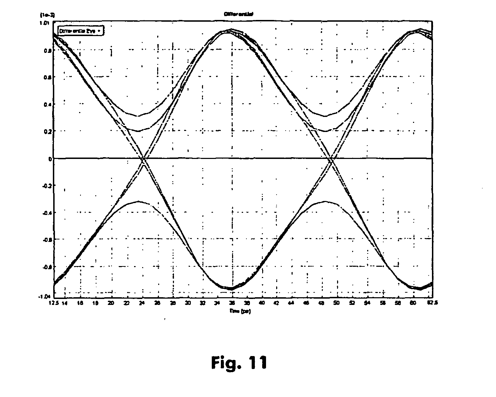

Also a differential eye can be generated by using a balance receiver as shown in figure 6, by substraction of the electrical signals from the two receivers. The figure 11 shows the differential eye generated by the RZ50% BL-FSK optical signal ($\Delta F \sim 100$ GHz) after Gaussian filtering. 3 Gaussian filters are used with a central wavelength difference of 100 GHz and a balance detector using 2 PIN photodiodes. Using a balanced receiver, the sensitivity of the BL-FSK modulation can achieve a gain of 3 dB in OSNR as it is the case for the DPSK.

It should be also mention that due to the flexibility and many possibilities offered by the BL-FSK modulation format, many parameters have to be optimized in order to achieve the optimal performance of this modulation format. Also, different optimums, regarding sensitivity or spectrum compactness or a certain ratio between them could be achieved by continuous variation of the frequency deviation of the modulation format.

The new BL-FSK modulation format achieve: higher Bit rates using electrical and electro-optical components specified for lower bit rates transmission (cost-reduction), higher spectral efficiency (higher values of bit/s/Hz), enhanced tolerances against CD (residual chromatic dispersion), PMD (polarization mode dispersion) and non-linear transmission impairments and better receiver performance (lower Bit Error Rate at low received powers) by balance detection.

**Claims**

1. A method for processing optical signals to be transmitted through on optical transmission line using optical pulse stream with a Frequency Shift Keying format, the method being **characterized by** comprising the steps of: generating that format starting from some differential pre-coded signal and using an optical phase modulator subjected to a limited bandwidth of half of the bit rote for driving the phase of the optical carrier signal.

2. The method for processing optical signals according to claim 1 **characterized by** defining the limited bandwidth by on electrical filter or by the intrinsic cutoff frequencies from the electrical and opto-electrical components.

3. The method for processing optical signals according to claim 1 **characterized by** collecting on the receiver side one of the two bit states of the optical signals at the carrier frequency, the other state at a frequency deviation or tone spacing.

**Patentansprüche**

1. Ein Verfahren zum Verarbeiten der optischen Signale, die durch eine optische Übertragungsstrecke zu übertragen sind, unter Verwendung einer optischen Impulsfolge mit einem Frequenzumtastungsformat, wobei das Verfahren **gekennzeichnet ist durch** umfassen der Schritte: Erzeugen dieses Formats beginnend von einem vorcodierten Differenzsignal und Verwenden eines optischen Phasenmodulators, der einer begrenzten Bandbreite von der Hälfte der Bitrate zum Steuern der Phase des optischen Trägersignals unterliegt.

2. Verfahren zum Verarbeiten der optischen Signale nach Anspruch 1, **gekennzeichnet durch** Definieren der begrenzten Bandbreite **durch** ein elektrisches Filter oder **durch** die eigenen Abschneidefrequenzen von den elektrischen und optoelektrischen Komponenten.

3. Verfahren zum Verarbeiten optischer Signale nach Anspruch 1, **gekennzeichnet durch** Erfassen auf der Empfängerseite eines der zwei Bitzustände der optischen Signale bei der Trägerfrequenz, des anderen Zustandes bei der Frequenzabweichung oder dem Tonabstand.

## Revendications

1. Procédé de traitement de signaux optiques à transmettre grâce à une ligne de transmission optique utilisant un train d'impulsions optiques avec un format de modulation par déplacement de fréquence, le procédé étant **caractérisé en ce qu'**il comprend les étapes de : génération de ce format commençant par un certain signal précodé différentiel et utilisation d'un modulateur de phase optique soumis à une bande passante limitée de la moitié du débit binaire pour commander la phase du signal de porteuse optique.

2. Procédé de traitement de signaux optiques selon la revendication 1 **caractérisé en ce qu'**il définit la bande passante limitée par un filtre électrique ou par les fréquences de coupure intrinsèques provenant des composants électriques ou opto-électriques.

3. Procédé de traitement de signaux optiques selon la revendication 1 **caractérisé en ce qu'**il collecte sur le côté de récepteur un des deux états de bits des signaux optiques à la fréquence de porteuse, l'autre état étant à une déviation de fréquence ou un espacement de tonalité.

**Fig. 1**

**Fig. 2a**

**Fig. 2b**

**Fig. 3**

**Fig. 4a**

**Fig. 4b**

**Fig. 5a**

**Fig. 5b**

**Fig. 6**

**Fig. 7a**

**Fig. 7b**

**Fig. 7c**

**Fig. 7d**

**Fig. 8**

**Fig. 9a**

**Fig. 9b**

**Fig. 10**

**Fig. 11**